# EUROPEAN PATENT APPLICATION

(11) **EP 4 455 953 A1**
(43) Date of publication of application: **30.10.2024**
(21) Application number: 22911210.7
(22) Date of filing: 20.12.2022
(51) Int. Cl.: G06Q 10/04, G01W 1/00

(54) **INFORMATION PROCESSING DEVICE, WATER BALANCE INFORMATION ACQUISITION METHOD, AND PROGRAM**

(30) Priority: 22.12.2021 JP 2021208116
(71) Applicant: Suntory Holdings Limited, Osaka-shi, Osaka 530-8203 (JP)
(72) Inventor: GOTO, Nozomi, Kyoto 6190284 (JP); KAWASAKI, Masatoshi, Kyoto 6190284 (JP)
(74) Representative: Vossius & Partner Patentanwälte Rechtsanwälte mbB
(86) International application number: PCT/JP2022/046815
(87) International publication number: WO 2023/120508

(57) **Abstract**

There has been a demand for a method for acquiring information on the water balance in a target area. An information processing apparatus 1 includes: a model acquiring unit 141 that acquires a water circulation model related to two or more parameters regarding water circulation, the model being configured to correspond to a target area; a known information acquiring unit 143 that acquires a value of at least one parameter out of the parameters regarding the water circulation obtained for the target area; and an estimated value acquiring unit 151 that acquires estimated values of one or more water balance items related to the water circulation model by performing inverse problem analysis using the water circulation model and the value acquired by the known information acquiring unit 143. Accordingly, it is possible to acquire information on the water balance in the target area.

## Description

### Technical Field

The present invention relates to an information processing apparatus, a water balance information acquiring method, and a program that are capable of acquiring information on the water balance in a target area.

### Background Art

In recent years, for example, when operating facilities such as factories, awareness is required of the amount of water resources in spatial units of regions with a certain range of spatial extent, such as units of facilities or units of watersheds that include the facilities. For example, the amount of water resources in a target area is monitored, the results of the monitoring are analyzed, and the results of the analysis are used for production activities, water resource operational management, water resource protection activities, and the like. For such activities, it is desirable that future predictions are made considering time scales as well, so that an effective future plan can be formulated and appropriate operational management can be carried out.

That is to say, conventionally, for example, when production activities are carried out in factories or the like, a large amount of water resources is used for, for example, boilers, raw materials, product processing, equipment cleaning, equipment cooling, equipment cleaning water for temperature control, and so on, regardless of the type of product to be produced. Examples of facilities that use water resources include facilities that own their own wells and withdraw water therefrom, and facilities that use tap water or industrial water purchased from the government or municipalities. In either water withdrawal method, water resources within or near the watershed surrounding the facility are used.

Whether or not it is possible to continuously operate a facility depends on the sustainability of water resource security in the watershed surrounding the facility. In order to increase the sustainability of securing water resources, it is important not only to improve the efficiency of water resource use at the facility, but also to formulate a facility operation plan so that the influence on water resources in the watershed surrounding the facility can be reduced. Specifically, for example, in formulating a facility operation plan, it is necessary to pay close attention to various parameters related to water circulation such as a river level, a groundwater level, and a spring water discharge. In addition, if the sustainability of securing water resources in the watershed surrounding the facility is estimated to be low, it is necessary to formulate an implementation plan for paddy field recharge activities and forest conservation activities, for example, in order to protect water resources.

Incidentally, it is not easy to accurately understand the behavior of water in a certain range of geosphere environment with a certain extent. Water is recharged and stored as groundwater or flows out of the region through evaporation, rainfall, river flow, infiltration, groundwater flow, spring water, and various other processes between various systems such as the atmosphere, the ground surface, and the underground.

Therefore, in order to check the sustainability of securing water resources in units of facilities and units of watersheds that include the facilities, it is necessary to monitor the balance of the water resources within the watersheds. In addition, it is necessary to appropriately manage the flow rate, the amount of storage, and the amount of fluctuations of the water resources (hereinafter referred to as the water balance in the target region) in units of facilities and units of watersheds that include the facilities.

Conventionally, water circulation models may be used for water resource management (see Patent Document 1 and Non-Patent Document 1 below, for example). Water circulation models make it possible to quantify the water balance in locations that are difficult to observe directly, and make it possible to manage water resources at any given location.

Patent Document 2 below describes that, in the case of analyzing movement of materials in groundwater using an advection dispersion delaying model in which a dispersion coefficient in the flow direction is taken as a material transport parameter, the parameter is determined by trial and error.

Furthermore, Patent Document 3 below describes that, in the case of analyzing a thermal response test that evaluates heat exchange characteristics of a ground based on a change over time of a temperature rise in the ground under investigation measured by the thermal response test, inverse analysis is performed that identifies an unknown parameter contained in an analytical solution of the heat transfer equation using the measured values obtained through measurement in the thermal response test.

### Citation List

### Patent Documents

Patent Document 1: JP 2011-13753A
Patent Document 2: Japanese Patent No. 3682954
Patent Document 3: Japanese Patent No. 5334221

### Non-Patent Document

Non-Patent Document 1: Nihon Suido Consultants Co., Ltd., "Bunpu-gata kozui yosoku moderu / Nihon Suido Consultants Co., Ltd. - Uruoi aru mirai e", [online], [accessed on June 12, 2020], Internet <URL: http://www.nissuicon.co.jp/jigyou/kasen/kouzui-yosoku/>

### Summary of Invention

### Technical Problem

In order to obtain information on the water balance in a target area using a water circulation model, it is necessary to acquire information on a parameter regarding the water circulation for use in the water circulation model. However, some parameters may be difficult to measure or may be undisclosed, making it difficult to obtain information.

The approach described in Patent Document 2 above allows a parameter to be determined by trial and error, but a different approach is also needed.

It is an object of the present invention to provide an information processing apparatus, a water balance information acquiring method, and a program that are capable of acquiring information on the water balance in a target area.

### Solution to Problem

A first aspect of the present invention is directed to an information processing apparatus including: a model acquiring unit that acquires a water circulation model related to two or more parameters regarding water circulation, the model being configured to correspond to a target area; a known information acquiring unit that acquires a value of at least one parameter out of the parameters regarding the water circulation obtained for the target area; and an estimated value acquiring unit that acquires estimated values of one or more water balance items related to the water circulation model by performing inverse problem analysis using the water circulation model and the value acquired by the known information acquiring unit.

With this configuration, it is possible to acquire information on the water balance in the target area.

Furthermore, a second aspect of the present invention is directed to the information processing apparatus according to the first aspect, further including: an evaluation unit that determines whether or not a predetermined evaluation condition is satisfied, using information on two or more parameters regarding the water circulation, including an estimated value of at least one water balance item acquired by the estimated value acquiring unit; and an evaluation information output unit that outputs evaluation information on a result of the determination performed by the evaluation unit.

With this configuration, it is possible to know evaluation information on the water circulation.

Furthermore, a third aspect of the present invention is directed to the information processing apparatus according to the second aspect, wherein the estimated value acquiring unit is configured to acquire an estimated value of a groundwater inflow amount in the target area and an estimated value of a pumping amount in the target area, and the evaluation unit determines whether or not a result of comparison between the estimated value of the groundwater inflow amount and the estimated value of the pumping amount satisfies the predetermined evaluation condition.

With this configuration, it is possible to know evaluation information on a relationship between the groundwater inflow amount and the pumping amount.

Furthermore, a fourth aspect of the present invention is directed to the information processing apparatus according to any one of the first to third aspects, wherein the target area is set so as to include one or more locations in which pumping is performed, the water circulation model is configured to relate to a pumping amount in the target area, and the estimated value acquiring unit is configured to acquire an estimated value of the pumping amount in the target area.

With this configuration, it is possible acquire information on the pumping amount in the target area.

Furthermore, a fifth aspect of the present invention is directed to the information processing apparatus according to the fourth aspect, wherein the water circulation model is configured to obtain a groundwater level as output of a direct problem, using at least information on the pumping amount in the target area, and the known information acquiring unit is configured to at least acquire a value of a groundwater level observed in the target area.

With this configuration, it is possible acquire information on the pumping amount in the target area, using a value of the groundwater level.

Furthermore, a sixth aspect of the present invention is directed to the information processing apparatus according to the fifth aspect, wherein the target area is set so as to include two or more locations in which pumping is performed, the known information acquiring unit is configured to at least acquire a value of a known pumping amount in the target area, and the estimated value acquiring unit acquires an estimated value of an unknown pumping amount in the target area.

With this configuration, it is possible to acquire information on an unknown pumping amount in the target area including two or more locations in which pumping is performed.

Furthermore, a seventh aspect of the present invention is directed to the information processing apparatus according to the sixth aspect, wherein the estimated value acquiring unit acquires an estimated value of a pumping amount in the entire target area by performing inverse problem analysis using the water circulation model and a value of another parameter that is different from the value of the known pumping amount, and acquires an estimated value of an unknown pumping amount by subtracting the value of the known pumping amount from the estimated value of the pumping amount in the entire target area.

With this configuration, it is possible to easily acquire information on an unknown pumping amount in the target area.

Furthermore, an eighth aspect of the present invention is directed to the information processing apparatus according to any one of the first to seventh aspects, wherein the estimated value acquiring unit acquires a value of a structure parameter regarding an underground structure for use in the water circulation model by performing inverse problem analysis by applying the value of the parameter regarding the water circulation acquired by the known information acquiring unit and an assumed value of another unknown parameter regarding the water circulation to the water circulation model.

With this configuration, it is possible to acquire a parameter regarding the underground structure for use in the water circulation model of the target area.

Furthermore, a ninth aspect of the present invention is directed to the information processing apparatus according to the eighth aspect, wherein the estimated value acquiring unit further acquires estimated values of one or more water balance items related to the water circulation model by performing inverse problem analysis by applying the acquired value of the parameter regarding the underground structure and the value of the parameter regarding the water circulation acquired by the known information acquiring unit to the water circulation model.

With this configuration, it is possible to acquire more accurate information on the water balance based on the parameter regarding the underground structure in the target area.

Furthermore, a tenth aspect of the present invention is directed to the information processing apparatus according to any one of the first to ninth aspects, wherein the water circulation model is configured to represent saturated infiltration flow.

With this configuration, it is possible to acquire information on the water balance with increased calculation speed by limiting the target area to an area that is represented by saturated infiltration flow and limiting the target area to an underground area with saturated infiltration flow.

### Advantageous Effects of Invention

According to the information processing apparatus of the present invention, it is possible to acquire information on the water balance in a target area.

### Brief Description of Drawings

FIG. 1 is a diagram illustrating the application of an information processing apparatus according to an embodiment.
FIG. 2 is a block diagram of the information processing apparatus in this embodiment.
FIG. 3 is a flowchart illustrating the use of the information processing apparatus.
FIG. 4 is a diagram showing an example of structure parameter acquisition that is performed by the information processing apparatus.
FIG. 5 is a diagram showing an example of verification of a structure parameter acquired from the information processing apparatus.
FIG. 6 is a schematic view of a computer system in the embodiment.
FIG. 7 is a block diagram of the computer system in the embodiment.

### Description of Embodiment

Hereinafter, an embodiment of an information processing apparatus and the like will be described with reference to the drawings.

The terms used below are generally defined as follows. The meanings of these terms do not always have to be interpreted as indicated herein, and have to be interpreted in light of individual explanations below, if any, for example.

"Identifier of a certain item" is a character, a code, or the like that uniquely indicates the item. Examples of codes include, but are not limited to, alphanumeric characters and other symbols. An identifier is, for example, a code string that itself does not indicate a specific meaning, but any type of information may be used as long as it can identify a corresponding item. That is to say, an identifier may be the exact name of what it indicates, or a combination of codes uniquely corresponding to what it indicates. A combination of two or more pieces of information (e.g., attribute values of records recorded in a database) may be used as an identifier.

"Acquiring" may include acquiring an item that is input by a user or the like, or acquiring information stored in the apparatus or another apparatus (the information may be information stored in advance or information generated through information processing in the apparatus). "Acquiring information stored in another apparatus" may include acquiring information stored in the other apparatus via an API or the like, or acquiring the content of a document file (including the webpage content, etc.) provided by the other apparatus.

Furthermore, a so-called machine learning method may be used to acquire information. A machine learning method may be used as follows, for example. That is to say, learning information in which a particular type of input information is taken as input and a type of output information that is to be acquired is taken as output is configured using a machine learning method. For example, two or more pairs of input information and output information are prepared in advance, the two or more pairs of information are given to a module for configuring learning information of machine learning to configure learning information, and the configured learning information is accumulated in a storage unit. The learning information may also be said to be a learning model or a classifier. There is no limitation on the machine learning method, and examples thereof include deep learning, random forests, and SVR. For example, functions in various machine learning frameworks and various existing libraries, such as fastText, tinySVM, random forest, and TensorFlow, can be used for the machine learning.

"Learning information" is not limited to those obtained through machine learning. The learning information may be a table indicating a correspondence between an input vector based on input information or the like and output information, for example. In this case, output information corresponding to a feature vector based on input information may be acquired from the table, or a vector that is close to a feature vector based on the input information may be generated using two or more input vectors in the table and parameters for weighting each input vector, and output information corresponding to the input vectors and parameters used in the generation may be used to acquire final output information. The learning information may be a function or the like representing a relationship between an input vector based on the input information or the like and information for generating output information, for example. In this case, for example, information corresponding to a feature vector based on input information may be obtained from a function, and the obtained information may be used to acquire output information.

"Outputting information" is a concept that encompasses display on a display screen, projection using a projector, printing by a printer, output of a sound, transmission to an external apparatus, accumulation in a recording medium, and delivery of a processing result to another processing apparatus or another program. Specifically, for example, this concept encompasses enabling information to be displayed on a webpage, transmission as an email or the like, and outputting information for printing.

"Accepting information" is a concept that encompasses accepting information input from an input device such as a keyboard, a mouse, or a touch panel, receiving information transmitted from another apparatus or the like via a wired or wireless communication line, and accepting information read from a recording medium such as an optical disk, a magnetic disk, or a semiconductor memory.

### Embodiment

In this embodiment, the information processing apparatus is configured to acquire estimated values of one or more water balance items by performing inverse problem analysis (inverse analysis) using a water circulation model related to two or more parameters regarding water circulation, the model being configured to correspond to a target area, and information on a groundwater level obtained in the target area. More specifically, the information processing apparatus is configured to acquire estimated values of one or more water balance items by performing inverse problem analysis using a water circulation model related to two or more parameters regarding the water circulation including a groundwater level, the model being configured to correspond to a target area, and information on a groundwater level obtained in the target area.

Furthermore, in this embodiment, the information processing apparatus determines whether or not a predetermined evaluation condition is satisfied, using information on two or more parameters regarding the water circulation, including an estimated value of at least one water balance item, and outputs information on a result of the determination, according to the result of the determination. Hereinafter, an example of the thus configured information processing apparatus will be described.

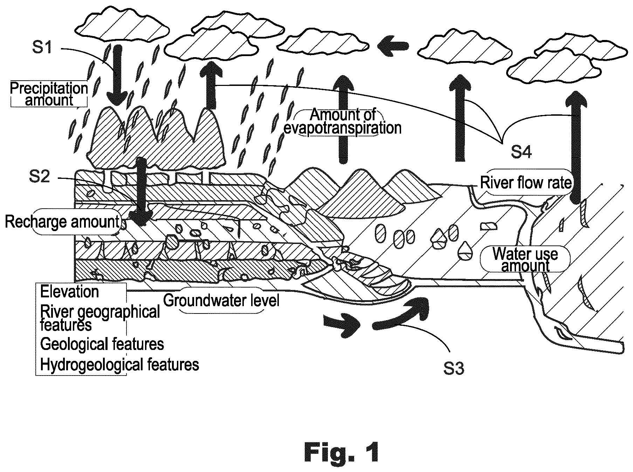

FIG. 1 is a diagram illustrating the application of an information processing apparatus according to an embodiment.

FIG. 1 shows a general water circulation using one watershed as an example. That is to say, in nature, water circulates through precipitation from the air (S 1), recharge to the ground (S2), discharge of groundwater to rivers and oceans (S3), evaporation from the ground surface, oceans, and the like (S4), and then precipitation from the air (S1). For each phase, for example, the recharge amount (the amount of water supplied from the ground surface to the groundwater surface), the groundwater level, the river flow rate, the water use amount associated with human activities, the amount of evapotranspiration, and the like can be values of water balance items and other parameters regarding the water circulation.

In this embodiment, the information processing apparatus is configured to, for example, be capable of outputting information on the water using a water circulation model. The water circulation model is a model in which the state of circulation of water resources is modeled in a target area including a forest, a river, and another type of land. The target area can be set, for example, in units of factories or in units of watersheds that include factories. That is to say, the target area can be set in space units that each have a certain spatial extent. The water circulation model is, for example, a distributed water circulation model whose target area is divided into unit areas.

The unit areas may be areas called meshes that constitute the model, or may be areas that have been divided in some other ways. A unit area may be said to be a pre-divided area. For example, an area of a predetermined size identified by latitude and longitude may be set as a unit area. The parameters of the unit areas included in one watershed may be set to the same value.

In this embodiment, the water circulation model is configured using a parameter group including two or more parameters. The distributed water circulation model is configured using a large number of meshes formed by dividing a unit area into a grid pattern, each mesh being associated with position information that specifies the position of the mesh, and a parameter group including two or more parameters regarding the water circulation (hereinafter, which may be simply referred to as parameters) that are applied to each mesh. For each mesh of the distributed water circulation model, the values of the parameters are set to simulate the state of circulation of water resources in the model. Position information regarding each mesh may be information indicating a relative positional relationship with an adjacent mesh, or information indicating an absolute position such as information indicating a position in a predetermined coordinate system.

The distributed water circulation model may be, for example, a known model such as "GETFLOWS (registered trademark)" or "FEFLOW". Note that the water circulation model is not limited to a distributed model, and may be, for example, a lumped model.

In this embodiment, it is preferable to use a water circulation model regarding the groundwater flow in which saturated infiltration flow is to be analyzed and unsaturated infiltration flow is not to be analyzed. In other words, it is preferable to limit the area to be modeled to areas with saturated infiltration flow. If the main flow to be calculated is limited to saturated infiltration flow in this manner, a water circulation model such as "FEFLOW" can be used. If the flow to be analyzed is limited only to saturated infiltration flow, the analysis can be simplified and can be performed quickly. More specifically, when saturated and unsaturated infiltration flow analysis is used to evaluate the recharge amount, it is necessary to separately model the physical properties of the soil (relationship between hydraulic conductivity and water potential, relationship between volumetric water content and water potential, etc.), which makes the model and analysis method complex. On the other hand, when the analysis is limited to saturated infiltration flow, the parameters regarding the physical properties of the soil can be used as constants, making the analysis simpler. In addition, as described below, in particular in the case of obtaining estimated values of water balance items such as the pumping amount, it is possible to obtain accurate estimated values even when analysis is performed considering only the area with saturated infiltration flow even though such an area is an important region for understanding the relationship with the surrounding area.

The parameters regarding the water circulation include parameters that correspond to water balance items as well as parameters that do not correspond to water balance items.

The water balance items refer to parameters indicating the amount of elements related to water circulation. The water balance items may correspond to, for example, a precipitation amount, a river flow rate, an amount of evapotranspiration, a pumping amount, an amount of storage, an amount of their fluctuations, or the like. Roughly speaking, it can be concluded that the precipitation amount is equal to the sum of the river flow rate, the amount of evapotranspiration, the pumping amount, and the amount of change in storage in a certain area. Parameters regarding such amounts that represent the water balance can be referred to as water balance items. The water balance items are not limited to these, and can be defined for any amount related to water resources as appropriate depending on the purpose of understanding the water balance or the like.

On the other hand, parameters that are not water balance items are those that do not represent the amount of water, but rather the potential. For example, the parameters that are not water balance items may correspond to hydraulic conductivity, a groundwater level, or the like. The parameters that are not water balance items may be referred to as parameters that indicate properties or conditions related to water circulation.

The parameters are not limited to these, and various parameters are selected depending on the type of water circulation model or the like. For example, those related to elements such as weather, a ground surface, a shallow layer, and a deep layer (e.g., precipitation, temperature, topsoil, sediments, permeable layer, etc.), those related to human activities (e.g., water pumping, water withdrawal, drainage, etc.), and those related to site-specific properties can be set. More specifically, for example, parameters such as a precipitation amount, a river flow rate, an amount of evapotranspiration, a pumping amount, an amount of change in storage, a temperature, a wind speed, a sunshine duration, a relative humidity, a crown cover, a plant canopy reservoir, a litter coverage, a litter storage, a snow cover-snow melt temperature, an albedo, a bulk transfer coefficient, a soil evaporation efficiency, a groundwater flow, an equivalent roughness coefficient, a groundwater flow, a hydraulic conductivity, an effective porosity, a solid-phase compressibility, a relative permeability, a capillary pressure, a fluid properties, a fluid density, an air density, a fluid viscosity coefficient, and an air viscosity coefficient may be set.

As will be described below, this embodiment is configured such that a value of an unknown parameter regarding water circulation for use in the water circulation model configured to estimate one or more water balance items in a target area can be estimated using an information processing apparatus 1 through inverse problem analysis. Estimation of a value of an unknown parameter regarding water circulation (hereinafter, which may be referred to as unknown information) using the information processing apparatus 1 makes it possible to acquire information on water circulation in a target area. Accordingly, it is possible to effectively manage and evaluate water resources in the target area.

In this embodiment, the unknown information may be those related to the flow rate, the amount of storage, or the amount of their fluctuations in water resources in a target area. More specifically, the unknown information may be the flow rate of groundwater in a target area. If a target area includes one or more locations in which pumping is performed, the unknown information may be those related to the pumping amount in the target area. The pumping amount in a target area refers to, but is not limited to, the pumping amount in the entire target area. For example, the pumping amount may be estimated for each predetermined location or for each mesh in the target area. If a target area includes two or more locations in which pumping is performed, the pumping amount may be estimated for each of these locations.

For example, for the purpose of managing groundwater resources, one may focus on the pumping amount as a flow rate of water resources. In this case, it is usually difficult to measure the pumping amount related to activities conducted by other entities, and it can be said that this is unknown information. When focusing on the pumping amount in the target area in this way, the unknown information can be estimated and acquired using the information processing apparatus 1.

Furthermore, the unknown information may be parameters that indicate properties or conditions related to water circulation and that are difficult to directly obtain in a target area. For example, various underground structure parameters regarding the underground structure of a target area may be acquired as the unknown information. In this case, an underground structure parameter acquired using a positional water circulation model may be applied to the same or different water circulation model to obtain other information. Examples of the underground structure parameter include, but are not limited to, parameters regarding geological features or structure such as hydraulic conductivity or effective porosity.

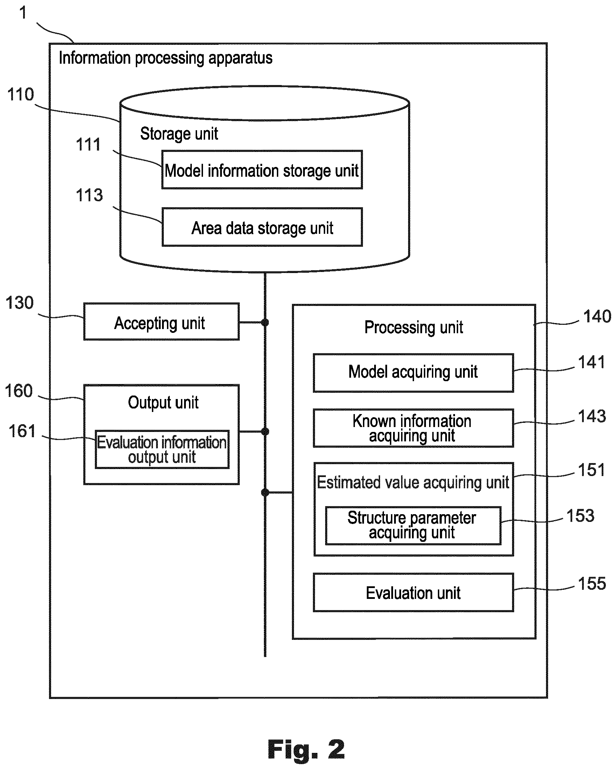

FIG. 2 is a block diagram of the information processing apparatus 1 in this embodiment.

As shown in FIG. 2, the information processing apparatus 1 includes a storage unit 110, an accepting unit 130, a processing unit 140, and an output unit 160. The information processing apparatus 1 is, for example, a personal computer, but is not limited to this, and may be a server apparatus, a mobile information terminal, or the like. The information processing apparatus 1 may be constituted by one server, multiple servers that operate in cooperation with each other, or an electronic computational machine or the like incorporated in another device. Note that the servers may be so-called cloud servers, ASP servers, or the like, and any type of server may be used. The user of the information processing apparatus 1 can use the information processing apparatus 1 by directly operating the information processing apparatus 1 or by using an unshown terminal device capable of communicating with the information processing apparatus 1.

The storage unit 110 includes a model information storage unit 111 and an area data storage unit 113. The storage unit 110 is preferably a nonvolatile recording medium, but may alternately be realized by a volatile recording medium. Although information accepted by the accepting unit 130, information acquired by the processing unit 140, and the like are stored in the units of the storage unit 110, there is no limitation on the information or the like that is stored in the units of the storage unit 110 or the procedure in which the information or the like is stored. For example, the information or the like may be stored in the storage unit 110 via a recording medium, the information or the like transmitted via a communication line or the like may be stored in the storage unit 110, or the information or the like input via an input device may be stored in the storage unit 110.

Information on a water circulation model is stored in the model information storage unit 111. The information on a water circulation model includes, for example, information on each of the meshes that constitute the model. For example, the values of the parameters applied to the meshes are stored in the model information storage unit 111.

The method for acquiring the water circulation model is not limited. It is sufficient that a water circulation model configured for a target area using any known method is stored in the model information storage unit 111.

Values of parameters regarding water circulation of a target area are stored in the area data storage unit 113. For example, known information obtained from information such as observation results or literature as well as unknown information acquired as described below may be stored in the area data storage unit 113.

Known information includes, but is not limited to, for example, data obtained from a survey, data acquired from an observing agency, and the like. The known information is stored, for example, in association with an identifier for identifying a parameter corresponding thereto. For example, known information on the precipitation amount is stored in association with an identifier of a parameter indicating the precipitation amount. The known information is associated with, for example, position information corresponding to a location, but there is no limitation to this. The position information may be information indicating a position, or information that can specify a mesh corresponding thereto. The known information is associated with, for example, time information indicating the time at which the information was acquired, but there is no limitation to this.

The accepting unit 130 accepts information input using an input part connected to the information processing apparatus 1, and information input through an input operation performed using a reading device (e.g., a code reader) connected to the information processing apparatus 1 (including, for example, information read by the device). The accepted information is stored, for example, in the storage unit 110. The information that can be accepted by the accepting unit 130 may be input by any input part such as a numeric keypad, a keyboard, a mouse, or a menu screen. The accepting unit 130 may be realized by a device driver for an input part such as a numeric keypad or a keyboard, control software for a menu screen, or the like. The accepting unit 130 may also accept information such as voice input by a microphone, for example.

The processing unit 140 may be realized typically by an MPU, a memory, or the like. Typically, the processing procedure of the processing unit 140 is realized by software, and the software is stored in a recording medium such as a ROM. Note that the procedure may be realized also by hardware (dedicated circuits). The processing unit 140 performs various types of processing. The various types of processing are, for example, processing that is performed by the units of the processing unit 140 as follows.

In this embodiment, the processing unit 140 includes a model acquiring unit 141, a known information acquiring unit 143, an estimated value acquiring unit 151, and an evaluation unit 155.

The model acquiring unit 141 acquires a water circulation model configured to correspond to a target area for which processing is to be performed. The model acquiring unit 141 acquires a water circulation model that is configured and stored in the model information storage unit 111 in advance, for example.

The known information acquiring unit 143 acquires a value of at least one parameter out of the parameters obtained for the target area. The known information acquiring unit 143 acquires, for example, known information stored in the area data storage unit 113 for the target area. If an estimated value of any unknown information has already been acquired by the processing unit 140 and stored in the area data storage unit 113 and that estimated value is used in subsequent processing, the estimated value may be referred to as known information.

In one example of use of the information processing apparatus 1 of this embodiment, the known information acquiring unit 143 is configured to at least acquire a value of the known pumping amount in the target area. For example, the amount of water resources pumped as a user of the information processing apparatus 1 performs an activity in the target area can be the known pumping amount.

The estimated value acquiring unit 151 acquires, for the target area, estimated values of one or more water balance items related to the water circulation model. In this embodiment, the estimated value acquiring unit 151 acquires an estimated value by performing inverse problem analysis using the water circulation model acquired by the model acquiring unit 141 and the value acquired by the known information acquiring unit 143. That is to say, an estimated value of a water balance item acquired by the estimated value acquiring unit 151 can be said to be an estimated value of a parameter that is different from the parameter serving as output (a response) of a direct problem in the water circulation model that is used by the estimated value acquiring unit 151. The estimated value acquiring unit 151 acquires an estimated value of unknown information by performing inverse problem analysis using a water circulation model and known information that contains a value of a parameter serving as a response in the water circulation model.

Known approaches for inverse problem analysis can be used, and specific examples thereof include, for example, inverse formulation method, output error method, and minimum variance estimation method. For example, inverse problem analysis may be performed through convergence calculations or the like using the so-called black box method.

In one example of use of the information processing apparatus 1 of this embodiment, the estimated value acquiring unit 151 is configured to, for example, acquire an estimated value of a pumping amount in the target area by performing inverse problem analysis. The estimated value acquiring unit 151 is configured to, for example, acquire an estimated value of a groundwater inflow amount in the target area by performing inverse problem analysis. In this case, the estimated value acquiring unit 151 may use a water circulation model configured to obtain the groundwater level as output of a direct problem, and known information containing a value of the groundwater level observed in the target area and the like.

In the above-mentioned example of use, the estimated value acquiring unit 151 is configured to acquire an estimated value of an unknown pumping amount in the target area, using the value of the known pumping amount in the target area acquired by the known information acquiring unit 143. In this case, the estimated value acquiring unit 151 first acquires an estimated value of the pumping amount in the entire target area by performing inverse problem analysis using the water circulation model and a value of another parameter that is different from the value of the known pumping amount. That is to say, inverse problem analysis is performed by applying a value of another parameter that is different from the value of the known pumping amount, to the water circulation model. The acquired estimated value is used to subtract the value of the known pumping amount from the pumping amount in the entire target area, thereby acquiring an estimated value of an unknown pumping amount. With this methods, it is possible to easily acquire information on an unknown pumping amount in the target area.

In this embodiment, the estimated value acquiring unit 151 includes a structure parameter acquiring unit 153. The structure parameter acquiring unit 153 acquires a value of a structure parameter regarding the underground structure for use in the water circulation model by performing inverse problem analysis as follows. That is to say, the estimated value acquiring unit 151 can be said to acquire a value of a structure parameter through inverse problem analysis. If a value of a structure parameter is acquired through inverse problem analysis, it is sufficient that a value of at least one structure parameter out of the structure parameters for use in the water circulation model is acquired, and a value of another structure parameter is acquired as known information.

A value of a structure parameter is acquired, for example, as follows. That is to say, the structure parameter acquiring unit 153 acquires an assumed value of another unknown parameter regarding the water circulation, which is different from a parameter regarding the water circulation acquired by the known information acquiring unit 143, that is, known information. The structure parameter acquiring unit 153 acquires a value of a structure parameter by performing inverse problem analysis by applying the known information and the assumed value to the water circulation model.

If a value of a structure parameter is acquired through inverse problem analysis in this manner, the estimated value acquiring unit 151 further acquires an estimated value of a water balance item related to the water circulation model by performing inverse problem analysis by applying the acquired value of the underground structure parameter and the value of the parameter regarding the water circulation acquired by the known information acquiring unit 143 to the water circulation model. That is to say, the estimated value acquiring unit 151 is configured to, in the case in which there are two or more pieces of unknown information, use an assumed value for one part of unknown information to acquire an estimated value of another part of unknown information, and further use the estimated value to acquire an assumed value of the one part of unknown information. Accordingly, it is possible to acquire more accurate information on the water balance based on the estimated value of the underground structure parameter in the target area.

The evaluation unit 155 determines whether or not a predetermined evaluation condition is satisfied, using information on two or more parameters regarding the water circulation, including an estimated value of at least one water balance item acquired by the estimated value acquiring unit 151. Various conditions can be set as the predetermined evaluation condition. For example, the predetermined evaluation condition can be that a relationship between values of two or more parameters is a predetermined relationship, that information obtained using values of two or more parameters satisfies a predetermined condition, or the like. More specifically, for example, the evaluation condition can be that a difference between values of two parameters is larger than or smaller than a predetermined value, that the total of values of two or more parameters is larger than or smaller than a predetermined value, or the like. The evaluation unit 155 may be configured to determine whether or not an estimated value of at least one water balance item acquired by the estimated value acquiring unit 151 satisfies the predetermined evaluation condition.

In one example of use of the information processing apparatus 1 of this embodiment, the evaluation unit 155 determines whether or not a result of comparison between the estimated value of the groundwater inflow amount and the estimated value of the pumping amount satisfies the predetermined evaluation condition. For example, the estimated value of the groundwater inflow amount is compared with that the pumping amount to determine whether or not the groundwater inflow amount is larger than the estimated value of the pumping amount by a predetermined degree. That is to say, if the groundwater inflow amount is larger than the estimated value of the pumping amount by a predetermined degree, the influence of fluctuations in the pumping amount on the water circulation can be said to be relatively small. On the other hand, if the groundwater inflow amount is not larger than the estimated value of the pumping amount by a predetermined degree, the influence of fluctuations in the pumping amount on the water circulation can be said to be relatively large.

The output unit 160 in this embodiment outputs information, for example, by displaying information on a display device provided in the information processing apparatus 1. In this embodiment, the output unit 160 includes, for example, an evaluation information output unit 161 that outputs evaluation information on a result of the determination performed by the evaluation unit 155. That is to say, if determination is performed by the evaluation unit 155, the output unit 160 can output the evaluation information. Accordingly, it is possible for the user to know evaluation information on the water circulation.

The output unit 160 may be configured to output information, for example, by causing an unshown transmitting unit or the like to transmit the information to another apparatus via a network or the like. The output unit 160 may be considered to include or not to include an output device such as a display screen or a speaker. The output unit 160 may be realized by driver software for an output device, a combination of driver software for an output device and the output device, or the like.

The output unit 160 may be configured to be capable of outputting an estimated value of unknown information, a structure parameter, and the like acquired by the estimated value acquiring unit 151 such that they can be used by the user. Accordingly, it is possible for the user to use information on the water circulation in the target area obtained using the information processing apparatus 1.

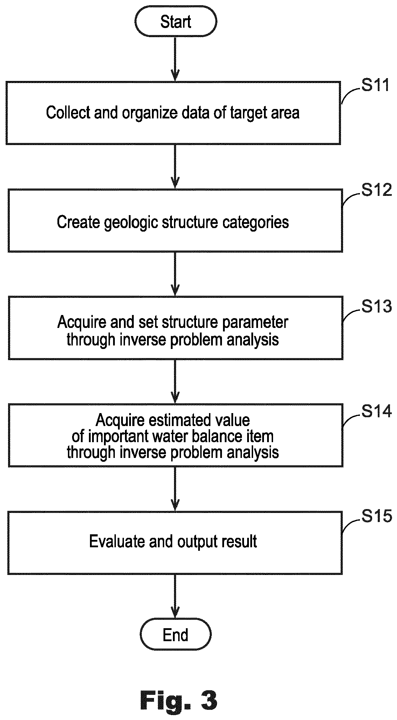

FIG. 3 is a flowchart illustrating the use of the information processing apparatus 1.

The user can use the thus configured information processing apparatus 1, for example, in the following procedure. The description below is merely an example, and various variations are possible depending on the configuration and application of the information processing apparatus 1.

(Step S 11) First, the user collects and organizes data to perform inverse problem analysis. That is to say, the user acquires known information and acquires information for configuring a water circulation model, for a target area. For example, the user acquires groundwater level data of the target area and data on underground structure categories, and organizes these pieces of data.

(Step S12) Next, the user creates geologic structure categories of the target area, and configures a water circulation model. This water circulation model can be said to be a "vessel" in which parameters are set. The user inputs information on the configured water circulation model and other known information to the information processing apparatus 1. The input information is stored in the storage unit 110.

In this case, it is preferable for the user to include only areas with saturated infiltration flow in the water circulation model, as described above. Accordingly, it is possible to more easily acquire an estimated value of a water balance item and output evaluation information. Note that "more easily" means that, for example, the processing can be performed with a smaller amount of calculation or in a shorter time.

(Step S13) In the information processing apparatus 1, the estimated value acquiring unit 151 first acquires a value of a structure parameter through inverse problem analysis using the input information, and sets the value in the water circulation model. For example, the hydraulic conductivity and the like according to the geological categories may be set analytically based on known information.

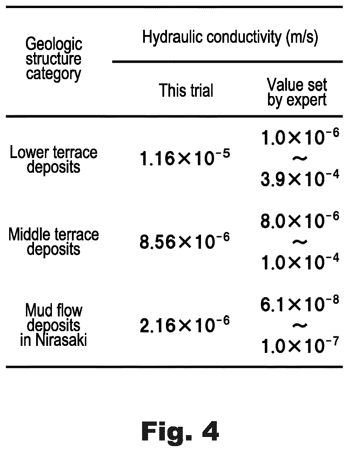

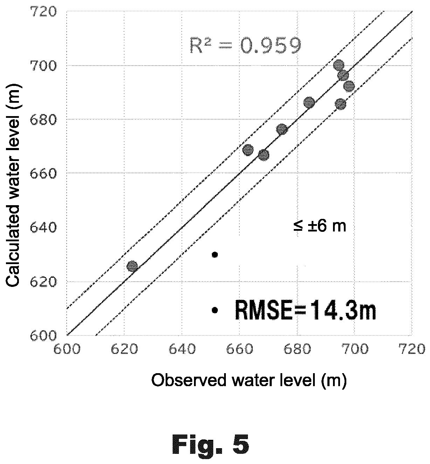

FIG. 4 is a diagram showing an example of structure parameter acquisition that is performed by the information processing apparatus 1. FIG. 5 is a diagram showing an example of verification of a structure parameter acquired from the information processing apparatus 1.

The examples shown in FIGS. 4 and 5 illustrate the results of a trial run to determine a hydraulic conductivity through inverse problem analysis for one target area. As show in FIG. 4, different estimated values of hydraulic conductivity ("this trial") are obtained for different geologic categories. The estimated values corresponding to lower and middle terrace deposits conform to the set values established by an expert. The trial was conducted by calculating the ground parameters a total of 60 times using a water circulation model with an evaluation function for the error between the observed and calculated water levels (RMSE) in the target area. FIG. 5 shows an example of verification through comparison of the calculated values output by the water circulation model with the measured values.

(Step S14) Returning to FIG. 3, the estimated value acquiring unit 151 of the information processing apparatus 1 acquires an estimated value of a water balance item that is to be acquired, by performing inverse problem analysis.

(Step S15) The evaluation unit 155 of the information processing apparatus 1 performs determination regarding the evaluation condition, using the acquired estimated value of the water balance item. The evaluation information output unit 161 outputs evaluation information on a result of the determination performed by the evaluation unit 155. Accordingly, the user can obtain evaluation information.

As described above, in this embodiment, the information processing apparatus 1 can acquire an estimated value of unknown information through inverse problem analysis using a water circulation model and known information. Accordingly, it is relatively easy to acquire information on the water balance in a target area. The information processing apparatus 1 can output evaluation information using the acquired estimated value. Accordingly, it is possible for the user to know evaluation information on the water circulation. In this case, it is possible to configure a water circulation model in which only important areas with saturated infiltration flow are extracted, and to use the model for inverse problem analysis. This will shorten the time required for the analysis and allow the user to easily obtain estimated values and evaluation information.

For example, in this embodiment, it is possible to acquire an estimated value of a pumping amount in a target area by performing inverse problem analysis using observed groundwater level data. Using this method, estimated values of the pumping amount were obtained in two target areas set in separate regions and compared with the measured values. In a first target area, the measured value was 51000 cubic meters per day, while the estimated value of the pumping amount was 34000 to 85000 cubic meters per day. In a second target area, the measured value was 5016 cubic meters per day, while the estimated value of the pumping amount was 4956 to 4957 cubic meters per day.

Furthermore, for example, in this embodiment, the ratio of the pumping amount to the groundwater inflow amount can be output as evaluation information using an estimated value of the pumping amount acquired using observed groundwater level data. For example, the results in the above-mentioned two target areas were as follows. That is to say, in the first target area, the groundwater inflow amount was 1370000 cubic meters per day, while the estimated value of the pumping amount was 34000 to 85000 cubic meters per day. Accordingly, the pumping amount in the first target area was estimated to be about 2 to 6 percent of the groundwater inflow amount. In the second target area, the groundwater inflow amount was 15000 cubic meters per day, while the estimated value of the pumping amount was 3000 cubic meters per day. Accordingly, the pumping amount in the second target area was estimated to be about 20 percent of the groundwater inflow amount. This evaluation information confirms that the influence of the pumping amount is lower in the first target area than in the second target area.

The estimated value acquiring unit 151 may obtain estimated values of two or more water balance items through inverse problem analysis. In this case, the obtained estimated values of two or more water balance items may be used to output evaluation information. For example, estimated values of both the groundwater inflow amount and the pumping amount may be obtained through inverse problem analysis.

The processing in this embodiment may be realized by software. The software may be distributed by software downloads or the like. Furthermore, the software may be distributed in a form where the software is stored in a recording medium such as a CD-ROM. The software that realizes the information processing apparatus 1 in this embodiment is the following sort of program. Specifically, this program is a program that is executed on a computer of the information processing apparatus 1, the program causing the computer of the information processing apparatus 1 to function as: a model acquiring unit that acquires a water circulation model related to two or more parameters regarding water circulation, the model being configured to correspond to a target area; a known information acquiring unit that acquires a value of at least one parameter out of the parameters regarding the water circulation obtained for the target area; and an estimated value acquiring unit that acquires estimated values of one or more water balance items related to the water circulation model by performing inverse problem analysis using the water circulation model and the value acquired by the known information acquiring unit.

In this embodiment, the information processing apparatus 1 is configured to be capable of acquiring an estimated value of a water balance item in a target area, using a distributed water circulation model. However, this apparatus may be configured to be capable of acquiring an estimated value of a water balance item without using a distributed water circulation model. For example, a water circulation model that is a so-called lumped model may be used.

### Others

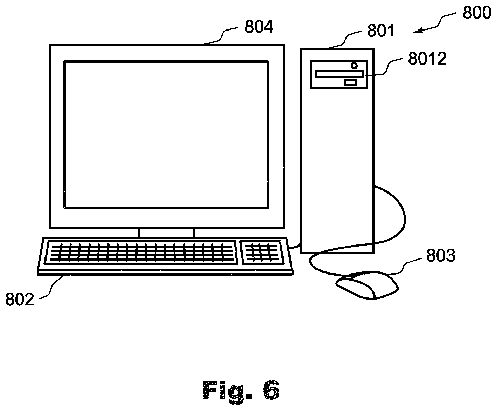

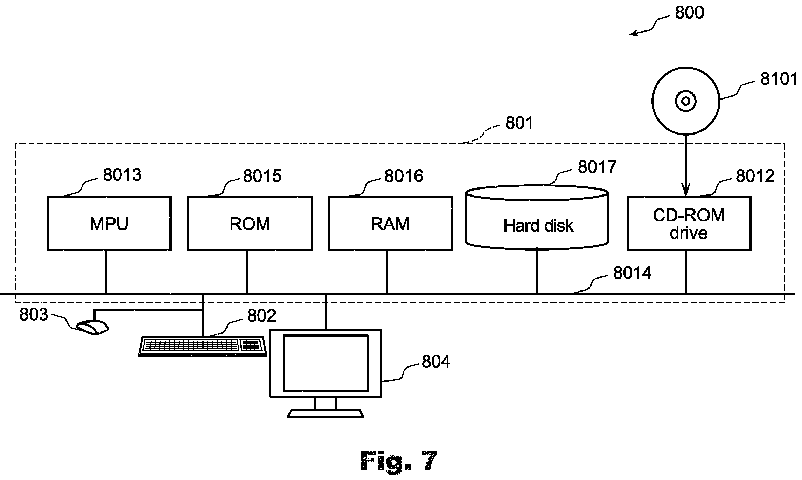

FIG. 6 is a schematic view of a computer system 800 in the foregoing embodiment. FIG. 7 is a block diagram of the computer system 800 in the embodiment.

These drawings show the configuration of a computer that executes the programs described in this specification to realize the information processing apparatus 1 and the like in the foregoing embodiment. The foregoing embodiment may be realized using computer hardware and a computer program executed thereon.

The computer system 800 includes a computer 801 including a CD-ROM drive, a keyboard 802, a mouse 803, and a monitor 804.

The computer 801 includes, in addition to the CD-ROM drive 8012, an MPU 8013, a bus 8014 connected to the CD-ROM drive 8012 and the like, a ROM 8015 in which a program such as a boot up program is stored, a RAM 8016 that is connected to the MPU 8013 and is a memory in which a command of an application program is temporarily stored and a temporary storage area is provided, and a hard disk 8017 in which an application program, a system program, and data are stored. Although not shown, the computer 801 may further include a network card that provides connection to a LAN.

Each program for causing the computer system 800 to execute the functions of the information processing apparatus and the like in the foregoing embodiment may be stored in a CD-ROM 8101 that is inserted into the CD-ROM drive 8012, and be transmitted to the hard disk 8017. Alternatively, the program may be transmitted via a network (not shown) to the computer 801 and stored in the hard disk 8017. At the time of execution, the program is loaded into the RAM 8016. The program may be loaded from the CD-ROM 8101, or may be loaded directly from a network.

The program does not necessarily have to include, for example, an operating system (OS) or a third party program to cause the computer 801 to execute the functions of the information processing apparatus and the like in the foregoing embodiment. The program may only include a command portion to call an appropriate function (module) in a controlled mode and obtain desired results. The manner in which the computer system 800 operates is well known, and thus a detailed description thereof has been omitted.

It should be noted that, in the program, in a transmitting step of transmitting information, a receiving step of receiving information, or the like, processing that is performed only by hardware such as processing that is performed by a modem or an interface card in the transmitting step (processing that can be performed only by hardware) is not included.

Furthermore, the computer that executes the program may constituted by a single computer, or constituted by multiple computers. That is to say, centralized processing may be performed, or distributed processing may be performed.

Furthermore, in the foregoing embodiment, two or more constituent elements in one apparatus may be physically realized by one medium.

In the foregoing embodiment, each process (function) may be realized as centralized processing using a single apparatus (system), or may be realized as distributed processing using multiple apparatuses (in this case, the entire system constituted by multiple apparatuses that perform distributed processing may be regarded as one "apparatus").

Furthermore, in the foregoing embodiment, information transmission performed between constituent elements may be such that, for example, if two constituent elements for transmitting information are physically different from each other, the transmission is performed by one of the constituent elements outputting the information and the other constituent element accepting the information, or alternatively, if two constituent elements for transmitting information are physically the same, the transmission is performed by shifting from a processing phase corresponding to one of the constituent elements to a processing phase corresponding to the other constituent element.

Furthermore, in the foregoing embodiment, information related to the processing that is performed by each constituent element, for example, information that is to be accepted, acquired, selected, generated, transmitted, or received by each constituent element, information such as a threshold value, a numerical expression, or an address used by each constituent element in the processing and the like may be retained in an unshown recording medium temporarily or for a long period of time even if not specified in the description above. Furthermore, the information may be accumulated in the unshown recording medium by each constituent element or by an unshown accumulating unit. Furthermore, the information may be read from the unshown recording medium by each constituent element or by an unshown reading unit.

Furthermore, in the foregoing embodiment, if information used by each constituent element or the like, for example, information such as a threshold value, an address, or various setting values used by each constituent element in the processing may be changed by a user, the user may be or may not be allowed to change such information as appropriate even if not specified in the description above. If the user is allowed to change such information, the change may be realized by, for example, an unshown accepting unit that accepts a change instruction from the user and an unshown changing unit that changes information according to the change instruction. The unshown accepting unit may accept the change instruction, for example, by accepting information from an input device, by receiving information transmitted via a communication line, or by accepting information read from a predetermined recording medium.

The present invention is not limited to the embodiment set forth herein. Various modifications are possible within the scope of the invention. Some of the constituent elements or the functions may be omitted in the foregoing embodiment. Furthermore, various modifications such as addition, deletion, modification, and order change of the steps may be made in the processing and procedures shown in the flowcharts above.

### Industrial Applicability

As described above, the information processing apparatus according to the present invention has the effect of making it possible to acquire information on a water balance in a target area, thus rendering this apparatus useful as an information processing apparatus and the like.

### List of Reference Numerals

- 1: Information processing apparatus
- 110: Storage unit
- 111: Model information storage unit
- 113: Observation data storage unit
- 130: Accepting unit
- 140: Processing unit
- 141: Model acquiring unit
- 143: Known information acquiring unit
- 151: Estimated value acquiring unit
- 153: Structure parameter acquiring unit
- 155: Evaluation unit
- 160: Output unit
- 161: Evaluation information output unit

## Claims

1. An information processing apparatus, comprising:
a model acquiring unit that acquires a water circulation model related to two or more parameters regarding water circulation, the model being configured to correspond to a target area;
a known information acquiring unit that acquires a value of at least one parameter out of the parameters regarding the water circulation obtained for the target area; and
an estimated value acquiring unit that acquires estimated values of one or more water balance items related to the water circulation model by performing inverse problem analysis using the water circulation model and the value acquired by the known information acquiring unit.

2. The information processing apparatus according to claim 1, further comprising:
an evaluation unit that determines whether or not a predetermined evaluation condition is satisfied, using information on two or more parameters regarding the water circulation, including an estimated value of at least one water balance item acquired by the estimated value acquiring unit; and
an evaluation information output unit that outputs evaluation information on a result of the determination performed by the evaluation unit.

3. The information processing apparatus according to claim 2,
wherein the estimated value acquiring unit is configured to acquire an estimated value of a groundwater inflow amount in the target area and an estimated value of a pumping amount in the target area, and
the evaluation unit determines whether or not a result of comparison between the estimated value of the groundwater inflow amount and the estimated value of the pumping amount satisfies the predetermined evaluation condition.

4. The information processing apparatus according to any one of claims 1 to 3,
wherein the target area is set so as to include one or more locations in which pumping is performed,
the water circulation model is configured to relate to a pumping amount in the target area, and
the estimated value acquiring unit is configured to acquire an estimated value of the pumping amount in the target area.

5. The information processing apparatus according to claim 4,
wherein the water circulation model is configured to obtain a groundwater level as output of a direct problem, using at least information on the pumping amount in the target area, and
the known information acquiring unit is configured to at least acquire a value of a groundwater level observed in the target area.

6. The information processing apparatus according to claim 5,
wherein the target area is set so as to include two or more locations in which pumping is performed,
the known information acquiring unit is configured to at least acquire a value of a known pumping amount in the target area, and
the estimated value acquiring unit acquires an estimated value of an unknown pumping amount in the target area.

7. The information processing apparatus according to claim 6,
wherein the estimated value acquiring unit
acquires an estimated value of a pumping amount in the entire target area by performing inverse problem analysis using the water circulation model and a value of another parameter that is different from the value of the known pumping amount, and
acquires an estimated value of an unknown pumping amount by subtracting the value of the known pumping amount from the estimated value of the pumping amount in the entire target area.

8. The information processing apparatus according to any one of claims 1 to 7, wherein the estimated value acquiring unit acquires a value of a structure parameter regarding an underground structure for use in the water circulation model by performing inverse problem analysis by applying the value of the parameter regarding the water circulation acquired by the known information acquiring unit and an assumed value of another unknown parameter regarding the water circulation to the water circulation model.

9. The information processing apparatus according to claim 8, wherein the estimated value acquiring unit further acquires estimated values of one or more water balance items related to the water circulation model by performing inverse problem analysis by applying the acquired value of the parameter regarding the underground structure and the value of the parameter regarding the water circulation acquired by the known information acquiring unit to the water circulation model.

10. The information processing apparatus according to any one of claims 1 to 9, wherein the water circulation model is configured to represent saturated infiltration flow.

11. A water balance information acquiring method comprising:
a model configuring step of configuring a water circulation model related to two or more parameters regarding water circulation, so as to correspond to a target area;
a known information acquiring step of acquiring a value of at least one parameter out of the parameters regarding the water circulation obtained for the target area; and
an estimated value acquiring step of acquiring estimated values of one or more water balance items related to the water circulation model by performing inverse problem analysis using the water circulation model and the value acquired in the known information acquiring step.

12. A program for causing a computer to function as:
a model acquiring unit that acquires a water circulation model related to two or more parameters regarding water circulation, the model being configured to correspond to a target area;
a known information acquiring unit that acquires a value of at least one parameter out of the parameters regarding the water circulation obtained for the target area; and
an estimated value acquiring unit that acquires estimated values of one or more water balance items related to the water circulation model by performing inverse problem analysis using the water circulation model and the value acquired by the known information acquiring unit.
